# EUROPÄISCHE PATENTSCHRIFT

(11) **EP 2 188 073 B1**
(45) Veröffentlichungstag und Bekanntmachung des Hinweises auf die Patenterteilung: **24.07.2013**
(21) Anmeldenummer: 08804141.3
(22) Anmeldetag: 12.09.2008
(51) Int. Cl.: B21B 31/07, F16N 7/32

(54) **WALZGERÜST ZUM WALZEN VON METALLISCHEN BÄNDERN SOWIE WALZE ODER ROLLE FÜR EIN SOLCHES WALZGERÜST**
ROLLING STAND FOR ROLLING METAL STRIPS, AND ROLL OR ROLLER FOR A ROLLING STAND OF THIS TYPE
CAGE DE LAMINOIR POUR LAMINER DES BANDES MÉTALLIQUES ET CYLINDRES OU ROULEAUX POUR LADITE CAGE DE LAMINOIR

(30) Priorität: 12.09.2007 DE 102007043403; 10.06.2008 DE 202008007718 U
(43) Veröffentlichungstag der Anmeldung: 26.05.2010
(73) Patentinhaber: Rebs Zentralschmiertechnik GmbH, 40885 Ratingen (DE); SMS Siemag AG, 40237 Düsseldorf (DE)
(72) Erfinder: REBS, Alexander, A. sen., 40885 Ratingen (DE); DAVIDS, Udo, 41239 Mönchengladbach (DE); SEIDEL, Ralf, 35690 Dillenburg (DE)
(74) Vertreter: Cohausz & Florack
(86) Internationale Anmeldenummer: PCT/EP2008/062178
(87) Internationale Veröffentlichungsnummer: WO 2009/034173

(56) Entgegenhaltungen:
- EP-A- 0 047 234
- DE-A1- 4 025 872
- JP-A- 6 210 327
- US-A- 5 253 733

## Beschreibung

Die Erfindung betrifft eine Walze oder Rolle gemäß dem Oberbegriff von Anspruch 1 und ein mit einer solchen Walze oder Rolle ausgerüstetes Walzgerüst zum Walzen von metallischen Bändern. Solche Walzgerüste weisen üblicherweise eine Bedienseite, von der aus das Walzgerüst für Wartungsarbeiten zugänglich ist, und eine Antriebsseite auf, an der ein Antrieb zum Antreiben des Walzgerüstes angeordnet ist.

Bei "Walzen" und "Rollen" der hier in Rede stehenden Art handelt es sich um in der Regel in ihrer Grundform zylindrische rotationssymmetrische Körper, die mit einer bestimmten Bombierung oder einer andersartigen speziellen Formgebung versehen sein können, um die jeweilige Walzaufgabe in der jeweils vorgeschriebenen Weise absolvieren zu können. Die "Walzen" sind dabei üblicherweise direkt mit dem Antrieb des Walzgerüstes verkoppelt und werden aktiv angetrieben, wogegen die "Rollen" ohne direkten Antrieb in dem Walzgerüst gelagert sind und im Walzbetrieb nur aufgrund des rollenden Kontakts mit einer Walze oder dem zu walzenden Gut in Rotation versetzt werden.

Die hier betrachtete Problemstellung tritt bei Walzen und Rollen gleichermaßen auf, so dass die folgenden Erläuterungen für Walzen und Rollen eines Walzgerüstes auch dann gleichermaßen gelten, wenn nur eines dieser Bauteile erwähnt ist.

Typischerweise sind die Walzen und Rollen von Walzgerüsten im Bereich ihrer Endzapfen jeweils in einer Wälzlagerung gelagert. Diese kann jeweils durch mehrere einzelne Wälzlager gebildet sein.

Aufgrund dessen, dass die Wälzlagerungen im Walzbetrieb große Kräfte aufnehmen müssen, bestehen an ihre Schmierstoffversorgung hohe Anforderungen. So dient der jeweils eingesetzte Schmierstoff einerseits zur Verringerung der im Wälzlager auftretenden Reibung. Gleichzeitig wird über den Schmierstoff ein Teil der Wärme abtransportiert, die sich im jeweiligen Lager aufgrund der dort unvermeidbar auftretenden Rollreibung bildet.

Wegen dieser Doppelfunktion des Schmierstoffs werden im praktischen Walzbetrieb große Ölströme durch die Wälzlager eines Walzgerüstes geleitet. Damit geht nicht nur eine apparativ aufwändige Ölversorgung einher, sondern es müssen auch große Ölmengen im Umlauf gehalten werden, deren Aufbereitung, Bevorratung und Entsorgung ebenfalls erheblichen Aufwand mit sich bringen. Hinzu kommt, dass zur Vermeidung von Leckströmen umfangreiche Maßnahmen zur Abdichtung der Lager erforderlich sind.

Aus der EP 0 047 234 A ist eine Wälzlageranordnung für eine auf einer Achse drehbar gelagerte Walze oder Rolle bekannt, bei der die Wälzkörper zwischen einem Wälzlagerinnenring und einem die Walze tragenden Wälzlageraussenring angeordnet sind. Dabei ist in die Achse eine sich in die Achse hinein erstreckende, als Sackloch ausgebildete Schmierbohrung eingeformt, die koaxial zur Drehachse der Walze ausgerichtet ist. In die Schmierbohrung mündet eine radial ausgerichtete weitere Bohrung, die die Schmierbohrung mit einer in die Umfangsfläche der Achse eingeformte Umfangsnut verbindet. Auf diese Weise wird im Spalt zwischen dem auf der betreffenden Umfangsfläche der Achse sitzenden Wälzlagerinnenring und der Achse ein Schmiermittelfilm aufrechterhalten.

Eine vergleichbar gestaltete Walzenordnung ist aus der JP 06 210327 A bekannt. Auch dort ist über Wälzlager ein hohlzylindrischer Rollenkörper auf einer Achse gelagert und in die Achse eine nach Art einer Sacklochbohrung ausgebildete Schmierstoffleitung eingeformt, von der radial ausgerichtete Verbindungsbohrungen zu jeweils einem der Wälzlager führen.

Als Alternative zur Schmierung der Wälzlager von Walzgerüsten mit großen Ölströmen haben sich so genannte "Öl-Luft-Schmierungen" bewährt. Diese erlauben eine genau dosierte Zuteilung der jeweils benötigten Schmierstoffmenge auf die jeweiligen Schmierstellen. Mit Hilfe von Öl-Luft-Schmierungssystemen kann nicht nur die Menge an im Umlauf gehaltenem Schmierstoff drastisch reduziert werden, sondern es ist gegenüber der auf einem konventionellen Ölstrom beruhenden Schmierung auch die Gefahr der Bildung von Leckagen und der für die Abdichtung der Lager erforderliche Aufwand deutlich vermindert.

Eine für den Einsatz in Walzgerüsten und vergleichbaren Maschinen besonders geeignete Einrichtung zum gleichmäßigen Aufteilen einer Schmierstoff-Gasstrom-Strömung auf eine Vielzahl von Abströmkanälen ist aus der EP 0 902 868 B1 bekannt. Diese bekannte Einrichtung weist eine Zuströmbohrung auf, die sich in eine Vielzahl von Abströmleitungen verzweigt. Um die gleichmäßige, von Schwerkrafteinflüssen unbeeinflusste Verteilung des Gas-/ Schmiermittelstromes unter Aufrechterhaltung einer turbulenten Strömung in allen Abströmleitungen zu erreichen, mündet dabei die Zuströmbohrung in eine sich in Strömungsrichtung erweiternde Verteilkammer. Im Bereich des Übergangs von der Zuströmbohrung in die Verteilkammer ist dabei eine umlaufende Abrisskante und auf der dem Ende der Zuströmbohrung gegenüberliegenden Wand der Verteilkammer eine konzentrisch zur Endöffnung der Zuströmbohrung ausgerichtete Prallfläche ausgebildet, deren Durchmesser größer ist als der Durchmesser der Zuströmbohrung. Um den Umfang der Prallfläche verteilt sind die Eingangsöffnungen der Abströmbohrungen angeordnet.

Die Montage der bekannten Einrichtung in den Bohrungen eines Walzgerüstes ist dadurch besonders einfach, dass die bekannte Verteilvorrichtung ein rohrförmiges Gehäuse besitzt, an dessen beiden Stirnseiten jeweils eine Aufnahme ausgebildet ist, von denen die erste zur Aufnahme eines zuströmseitigen Anschlusselements und die zweite zur Aufnahme eines zweiten Anschlusselements bestimmt ist.

Ältere Einrichtungen zum Verteilen eines Schmierstoff-Gasstroms sind aus der US 5 253 733 oder der EP 0 010 269 B1 bekannt.

In der Praxis wird in Verteileinrichtungen der voranstehend erläuterten Art zum Vorantreiben des jeweiligen Schmierstoffs Druckluft verwendet, die im Umfeld einer Walzstraße zum Walzen von metallischen Bändern üblicherweise zur Verfügung steht.

Beispielsweise dann, wenn im Bereich des jeweiligen Walzgerüstes nur wenig Raum zur Verfügung steht, erweist sich das Nachrüsten von bereits bestehenden Walzgerüsten mit Öl-Gasstrom-Schmiereinrichtungen der voranstehend erläuterten Art als schwierig. Auch wird bei Neukonstruktionen in der Regel gefordert, dass der für die Schmierstoffversorgung der Wälzlager benötigte Aufwand an Versorgungsleitungen und Ähnlichem auf ein Minimum reduziert ist, damit die Wartung des Lagers und eventuell erforderliche Reparaturen einfach durchgeführt werden können.

Vor diesem Hintergrund lag der Erfindung die Aufgabe zugrunde, eine Walze oder Rolle zu schaffen, mit der es auf einfache und betriebssichere Weise möglich ist, in einem mit einer solchen Walze oder Rolle ausgestatteten Walzgerüst ein zum Lagern der Welle oder Rolle vorgesehenes Wälzlager mit einer präzise bestimmten Schmierstoffmenge zu versorgen. Ebenso sollte ein Walzgerüst vorgeschlagen werden, bei dem eine präzise Schmierstoffversorgung eines zum Lagern der Walze oder Rolle vorgesehenen Lagers auf einfache Weise möglich ist.

In Bezug auf die Walze oder Rolle ist diese Aufgabe erfindungsgemäß dadurch gelöst worden, dass eine solche Walze oder Rolle die in Anspruch 1 angegebenen Merkmale aufweist. Vorteilhafte Ausgestaltungen einer solchen Walze oder Rolle sind in den auf Anspruch 1 rückbezogenen Ansprüchen angegeben.

Genauso ist die oben genannte Aufgabe durch ein Walzgerüst gelöst worden, das erfindungsgemäß in der in Anspruch 8 angegebenen Weise gestaltet ist.

Die Erfindung schlägt eine Walze oder Rolle für ein Walzgerüst zum Walzen metallischer Bänder vor, in dem bei Gebrauch die Walze oder Rolle im Bereich ihrer Endzapfen jeweils in einer Wälzlagerung gelagert ist. Dabei ist mindestens eine Verteileinrichtung zum Verteilen eines Schmierstoff-Gasstroms vorgesehen und für die Zu- oder Ableitung des Schmierstoff-Gasstroms in die jeweilige Rolle oder Walze ein Verbindungskanal eingeformt. Auf diese Weise lässt sich bei einem in erfindungsgemäßer Weise mit einer erfindungsgemäßen Walze oder Rolle ausgestatteten Walzgerüst der Walzen- oder Rollenkörper selbst zum Transport von Schmierstoff zu den jeweils zu versorgenden Schmierstellen nutzen.

Der wesentliche Vorteil der erfindungsgemäßen Gestaltung einer Walze oder Rolle für ein Walzgerüst besteht darin, dass für die Schmierstoffversorgung der jeweils zu schmierenden Lager an dem jeweiligen Walzgerüst keine zusätzlichen Leitungen vorgesehen werden müssen, die im praktischen Betrieb den Zugang zu dem Walzgerüst und seinen Einzelteilen behindern und aufgrund der rauen Betriebsbedingungen, unter denen Walzgerüste der in Rede stehenden Art eingesetzt werden, beschädigt werden könnten. Stattdessen ist bei einem erfindungsgemäßen Walzgerüst der Leitungsaufwand minimiert und die zum Versorgen der zu schmierenden Lagerstellen benötigte Versorgungsleitung verläuft an einer Stelle, nämlich durch den jeweiligen Walzen- oder Rollenkörper, an dem eine Beschädigung oder eine andere in Folge äußerer Kräfte verursachte Funktionsstörung praktisch ausgeschlossen ist.

Besonders vorteilhaft erweist sich die Erfindung, wenn ein erfindungsgemäßes Walzgerüst in Übereinstimmung mit dem bisher bekannten Stand der Technik eine Bedienseite, von der aus das Walzgerüst für Montage- und/oder Wartungsarbeiten zugänglich ist, und eine Antriebsseite aufweist, an der ein Antrieb zum Antreiben des Walzgerüstes angeordnet ist und die vom Betriebspersonal aufgrund der dort herrschenden erhöhten Unfallgefahr und schlechten Zugänglichkeit möglichst gemieden wird. Indem nämlich der Versorgungskanal in die jeweilige Walze oder Rolle eingeformt wird und diese Rolle oder Walze von der Bedienseite her aus dem Walzgerüst gezogen bzw. in das Walzgerüst eingeschoben werden kann, ist auch die Wartung des Verbindungskanals und der mit ihm verbundenen Versorgungsaggregate besonders einfach. Eine besonders einfache Zugänglichkeit und eine dementsprechend einfache Anschlussmöglichkeit des Verbindungskanals ist dabei dann gegeben, wenn sich der Verbindungskanal von der der Bedienseite zugeordneten Stirnseite bis zur der Antriebsseite zugeordneten Stirnseite der Walze oder Rolle erstreckt.

Die erfindungsgemäße Ausgestaltung eines Walzgerüstes bietet somit deutliche Vorteile gegenüber einer Versorgung der zu schmierenden Stellen über ein separates, zusätzlich an das Walzgerüst angebrachtes Leitungssystem. So erlaubt es die Erfindung, die Schmierstellen eines Walzgerüsts mit einer konstruktiv besonders einfachen Lösung mit von dem Gasstrom zu ihm getriebenen Schmierstoff zu versorgen, die für die ordnungsgemäße Funktion des jeweiligen Lagers benötigt wird.

Aufgrund dessen, dass der den Verbindungskanal durchströmende Schmierstoff-Gasstrom im Wesentlichen unbeeinflusst vom Verlauf und der Anordnung des Verbindungskanals und Ausrichtung strömt, hat die Art und Weise, wie der Verbindungskanal in der jeweiligen Walze oder Rolle eingebracht ist, für die durch die Erfindung erzielten Effekte nur eine untergeordnete Bedeutung. Besonders einfach lässt sich der erfindungsgemäß vorgesehene Verbindungskanal jedoch dann in einer Walze oder Rolle einbringen, wenn er zumindest im Wesentlichen koaxial zur Drehachse der Walze oder Rolle verläuft. Dies hat fertigungstechnisch den Vorteil, dass sich eine solche zentrale Anordnung des Verbindungskanals beispielsweise durch Bohren besonders einfach realisieren lässt.

Dabei kann der Verbindungskanal praktischerweise durch zwei in Längsrichtung der Walze oder Rolle verlaufende aufeinander treffende Bohrungen hergestellt sein, von denen die eine ausgehend von der einen beispielsweise der Bedienseite zugeordneten Stirnseite und die andere von der anderen, beispielsweise der Antriebsseite zugeordneten Stirnseite in die Walze oder Rolle eingeformt ist. Diese Möglichkeit der Herstellung lässt sich in der Praxis mit vergleichbar geringem Fertigungsaufwand verwirklichen, zumal keine besonderen Anforderungen an die Genauigkeit, mit der die beiden Bohrungen sich treffen, gestellt werden. Selbst gewisse Sprünge in dem Bereich, an dem die beiden Bohrungen aufeinander treffen, stören die Gleichmäßigkeit des Verteilungsergebnisses nicht, solange der Durchtritt von ausreichend Schmierstoff- und Gasströmung durch den jeweiligen Kanaldurchmesser im Bereich des Zusammentreffens gewährleistet ist.

Besonders geeignet ist die Erfindung für solche Gerüste, die zum Warmwalzen von metallischen Bändern bei Temperaturen oberhalb von 400 °C vorgesehen sind. Dies gilt ganz besonders für Walzgerüste, die alleine oder als Teil einer Warmwalzstaffel zum Warmwalzen von Stahlbändern eingesetzt werden. Gerade bei solchen Warmwalzgerüsten zeigen sich die Vorteile einer durch die Erfindung auf einfache Weise ermöglichten präzisen Schmierung der jeweiligen Wälzlager mit minimierten Schmierstoffmengen.

Von dem zentralen Verbindungskanal können in radialer Richtung zu den jeweils zu versorgenden Schmierstellen führende Abströmkanäle abgehen. Diese Abströmkanäle können den Ausgängen eines in der Walze oder Rolle sitzenden Verteilers zugeordnet sein.

Genauso kann es jedoch auch zweckmäßig sein, den Verbindungskanal vom einen zum anderen Ende der jeweiligen Walze oder Rolle zu führen und ihn dort über geeignete Anschlusselemente dem jeweiligen außerhalb der Walze oder Rolle angeordneten Verteiler zuzuführen, der ihn dann auf die zu versorgenden Schmierstellen aufteilt.

Um einen betriebssicheren Anschluss des Verbindungskanals an die jeweils über den Verbindungskanal zu versorgenden Aggregate zu ermöglichen, kann der Verbindungskanal mit einer zentralen Einspeiseeinrichtung über eine Versorgungsleitung verbunden sein, die über ein drehentkoppeltes, in dem Verbindungskanal steckendes Anschlusselement in den Verbindungskanal mündet.

Weiter vereinfacht werden kann die Wartung eines in erfindungsgemäßer Weise mit einem Verteiler für einen Schmierstoff-Gasstrom ausgestatteten Walzgerüstes dadurch, dass in mindestens einen der Endzapfen der Walze oder Rolle eine Aufnahme eingeformt ist, in der eine Verteileinrichtung zum Verteilen eines Schmierstoff-Gasstroms auf mindestens einer Abströmleitung sitzt, die von der jeweiligen Aufnahme durch die Walze oder Rolle zur dem jeweiligen Zapfen zugeordneten Wälzlagerung führt.

Die Aufnahme ist dabei bevorzugt in einen der Endzapfen der jeweiligen Walze oder Rolle eingeformt, der in dem zu versorgenden Lager gelagert ist. Ausgehend von der Aufnahme führen dann ebenfalls in die jeweilige Rolle oder Walze eingeformte Abströmleitungen zu dem jeweiligen Wälzlager. Die Mündungen dieser Abströmbohrung können problemlos jeweils so angeordnet werden, dass der aus ihnen austretende Schmierstoff an der jeweils optimalen Stelle in das zu schmierende Wälzlager gelangt.

Mit der erfindungsgemäßen Anordnung der Verteiler für die Schmierstoff-Gasstrom-Versorgung in dem jeweiligen Zapfen einer Rolle oder Walze lässt sich so die Versorgung von Wälzlagern des Walzgerüstes mit einem Schmierstoff-Gasstrom besonders einfach bewerkstelligen. Aufwändige Verrohrungen, die unter erheblichem Aufwand an dem Gerüst montiert oder in das Gestell des Walzgerüsts eingeformt werden müssten, werden dazu nicht benötigt. Stattdessen erlaubt es die Erfindung, die zum Versorgen des jeweiligen Wälzlagers benötigten Elemente in die an einem vom Walzgerüst entfernten Ort vorgefertigte Rolle oder Walze einzubringen.

Sofern dazu der Bedarf besteht, ist es zweckmäßig, wenn in jeden der Endzapfen der jeweiligen Walze oder Rolle jeweils mindestens eine Aufnahme für jeweils eine Verteileinrichtung eingeformt ist. Eine besonders einfache Ausgestaltung ergibt sich dabei dann, wenn die in die Endzapfen eingebrachten Aufnahmen durch einen durch die jeweilige Walze oder Rolle führenden Verbindungskanal miteinander verbunden sind.

Ein solcher sich durch die jeweilige Rolle oder Walze hindurch ziehender Verbindungskanal hat den wesentlichen Vorteil, dass die Verteileinrichtungen beider Endzapfen der jeweiligen Rolle oder Walze über einen zentralen am einen Endzapfen vorgesehenen Versorgungsanschluss mit dem benötigten Schmierstoff-Gasstrom versorgt werden können. Dabei nutzt die Erfindung die bei den bekannten Verteileinrichtungen problemlos bestehende Möglichkeit, den ersten Verteiler nicht nur zum Aufteilen des Schmierstoffstroms auf die zu den dem jeweiligen Verteiler direkt zugeordneten Schmierstellen zu nutzen, sondern auch einen Teil des Schmierstoffstroms einem zweiten Verteiler zuzuteilen. Dieser zweite Verteiler wirkt insoweit als Unterverteiler und verteilt den ihm zugeteilten Schmierstoffstrom auf die ihm zugeordneten Schmierstellen.

Bei einer erfindungsgemäßen Walze oder Rolle und einem mit einer solchen Walze oder Rolle ausgestatteten Walzgerüst können die der Antriebsseite und der Bedienseite des Walzgerüstes jeweils zugeordneten Einrichtungen zum Verteilen des Schmierstoff-Gasstroms über den Verbindungskanal so miteinander verkoppelt sein, dass die zentrale Versorgung beider Verteileinrichtungen über eine einzige Versorgungsleitung erfolgen kann, wobei die unmittelbar mit der Versorgungsleitung verbundene Verteileinrichtung der nicht an die Versorgungsleitung direkt angeschlossenen Verteileinrichtung den erforderlichen Schmierstoffstrom zuteilt.

Gerade in dem Fall, dass in jeden Endzapfen der jeweiligen Walze oder Rolle des erfindungsgemäßen Walzgerüstes jeweils eine Schmierstoff-Gasstrom-Verteileinrichtung sitzt und diese Verteileinrichtungen über einen Verbindungskanal miteinander verbunden sind, stehen somit ein Walzgerüst beziehungsweise eine für ein solches Walzgerüst bestimmte Rolle oder Walze zur Verfügung, bei der die Schmierstoff-Gasstrom-Versorgung auf besonders einfache Weise erfolgen kann.

Letzteres gilt insbesondere dann, wenn die Versorgung der Verteileinrichtungen von der Bedienseite des Gerüstes aus erfolgt. In diesem Fall fällt weder der mit der nachträglichen Montage einer Schmierstoff-Gasstrom-Versorgung der der Antriebsseite des Walzgerüsts zugeordneten Wälzlager verbundene Aufwand noch der mit der regelmäßigen Wartung dieser Lager beim Stand der Technik verbundene Umstand an.

Auf besonders praktische Weise lässt sich die der Bedienseite zugeordnete Verteileinrichtung mit der zentralen Schmierstoff-Gasstrom-Versorgungsleitung verbinden, wenn die Versorgungsleitung über ein drehentkoppeltes, in der jeweiligen bedienseitigen Aufnahme steckendes Anschlusselement in der betreffenden Aufnahme mündet.

Für die Aufteilung der bedienseitig und antriebsseitig jeweils benötigten Schmierstoff-Gasströme lassen sich gleichartige Verteileinrichtungen verwenden, wenn die Öffnung der der Antriebsseite des Walzgerüstes zugeordneten Aufnahme mit einem Stopfen verschlossen ist.

Nachfolgend wird die Erfindung anhand einer Ausführungsbeispiele darstellenden Zeichnung näher erläutert. Es zeigen jeweils schematisch:
- Fig. 1: ein Walzgerüst zum Warmwalzen eines Stahlbands in einer frontalen stark vereinfachten Ansicht;
- Fig. 2: eine in dem in Fig. 1 gezeigten Walzgerüst eingesetzte Walze in längsgeschnittener Ansicht;
- Fig. 3: den einen Endzapfen der in Fig. 2 dargestellten Arbeitswalze in vergrößerter teilgeschnittener Ansicht;
- Fig. 4: den anderen Endzapfen der in Fig. 2 dargestellten Arbeitswalze in vergrößerter teilgeschnittener Ansicht.

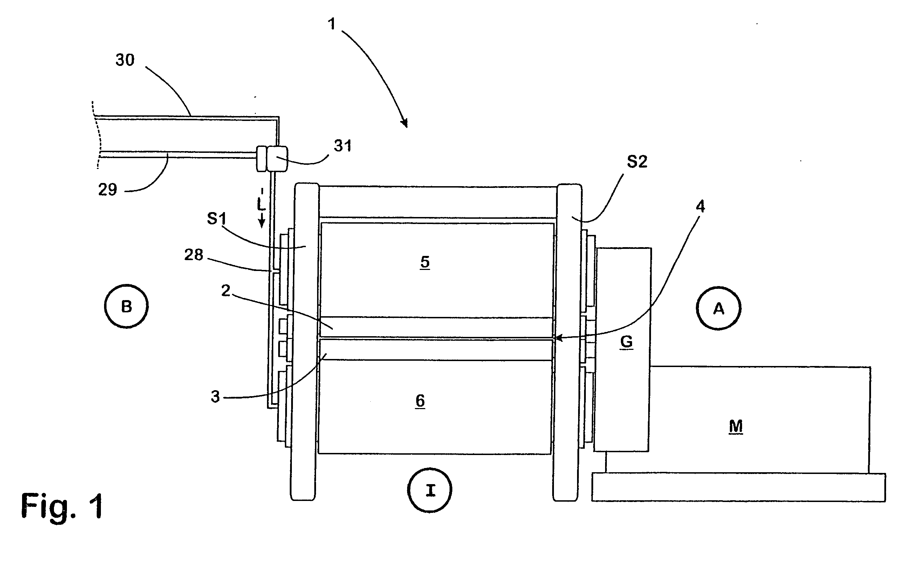

Das in Fig. 1 dargestellte Walzgerüst 1 des Quarto-Typs weist zwei Arbeitswalzen 2, 3 auf, die zwischen sich den vom jeweils zu walzenden Walzgut zu durchlaufenden Walzspalt 4 begrenzen. Die Arbeitswalzen 2, 3 werden jeweils durch eine Stützwalze 5, 6 gegen die im Walzbetrieb auf sie wirkenden Kräfte abgestützt. Die Drehachsen der Arbeits- und Stützwalzen 2, 3, 5, 6 liegen dabei in einer Vertikalebene.

Selbstverständlich lässt sich die hier erläuterte Erfindung in derselben oder einer entsprechend angepassten Weise auch bei jedem anderen Walzgerüst-Typ einsetzen, bei dem eine Schmierung der Wälzlager erforderlich ist, in denen die Walzen oder Rollen des betreffenden Walzgerüstes gelagert sind.

Zum Antrieb des Walzgerüstes 1 ist in bekannter Weise ein elektrischer Antriebsmotor M vorgesehen, der über ein Getriebe G mit den Arbeits- und Stützwalzen 2, 3, 5, 6 verkoppelt ist. Motor M und Getriebe G sind dabei in Verlängerung der Drehachsen der Arbeits- und Stützwalzen 2, 3, 5, 6 auf der so genannten "Antriebsseite" A des Walzgerüstes 1 angeordnet, während die gegenüberliegende Seite des Walzgerüsts 1, die so genannte "Bedienseite" B für Wartungs- und Montagezwecke frei zugänglich ist.

Mit ihren jeweiligen Endzapfen 7, 8 sind die Arbeits- und Stützwalzen 2, 3, 5, 6 in an sich bekannter Weise in den Ständern S1, S2 des Walzgerüstes 1 jeweils in Wälzlagerungen gelagert.

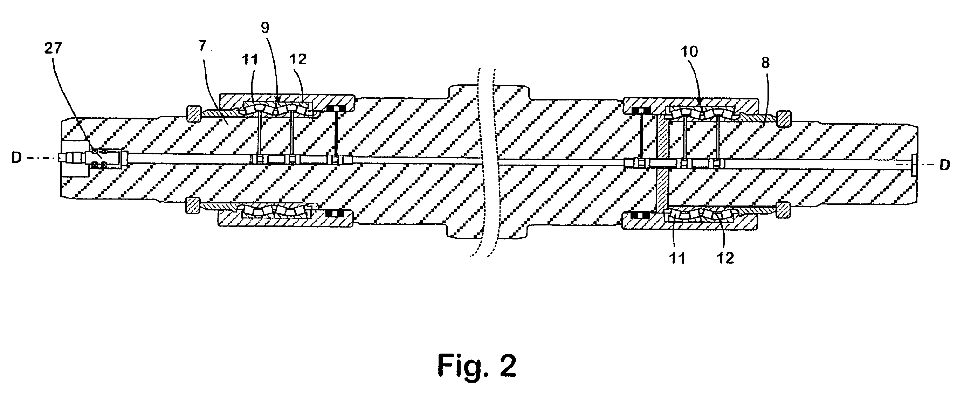

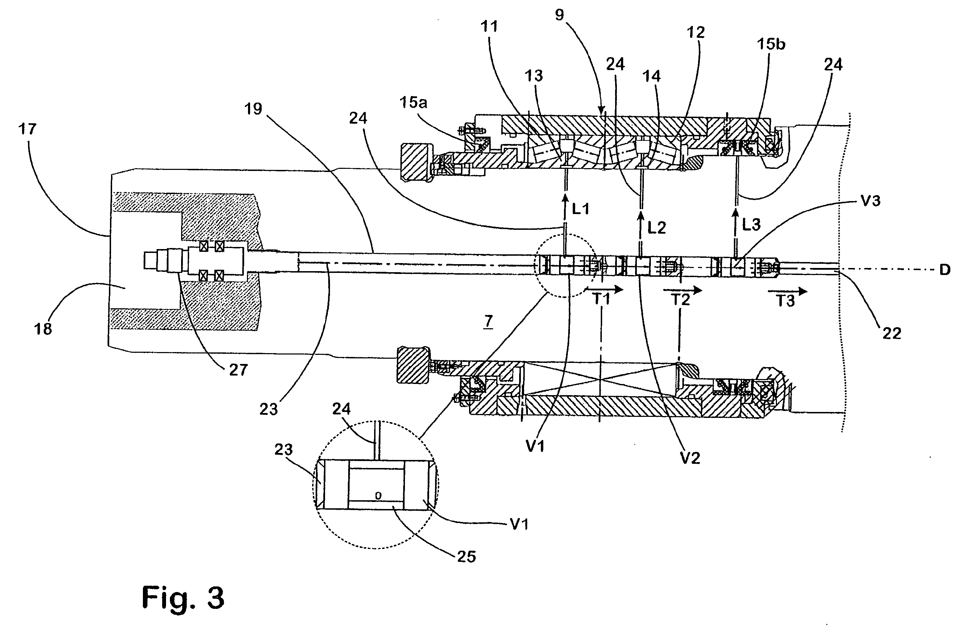

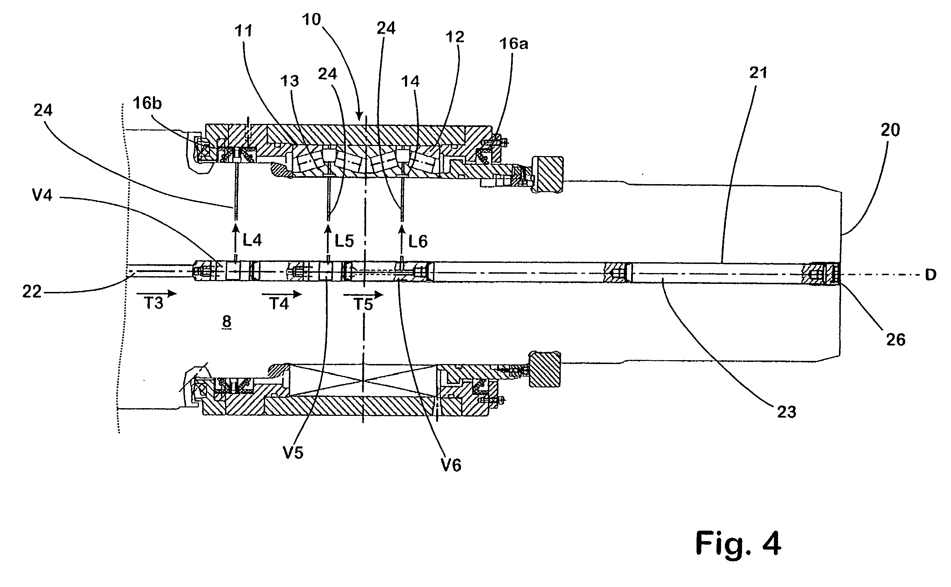

Bei der in den Figuren 2 - 4 gezeigten Arbeitswalze ist jede der jeweiligen Wälzlagerungen 9, 10 in an sich ebenfalls bekannter Weise durch jeweils zwei Doppel-Kegelrollengroßlager 11, 12 gebildet. In die innere Umfangsfläche des inneren Lagerrings 13 dieser Kegelrollenlager 11, 12 ist jeweils eine Innenumfangsnut 14 eingeformt, von der in regelmäßigen Winkelabständen um die Drehachse der Lager verteilte, in radialer Richtung weisende Durchgangsöffnungen zur Lauffläche des jeweiligen Lagerrings 13 führen. Alternativ oder ergänzend könnten entsprechend positionierte und ausgelegte Umfangsnuten auch in den jeweiligen Endzapfen 7, 8 der Arbeitswalze 2 eingeformt sein.

Über konventionelle Wellendichtungen 15a,15b,16a,16b sind die Wälzlager gegenüber der Umgebung abgedichtet. Die Wellendichtungen 15a,15b,16a,16b sind dabei so ausgelegt, dass sie ein Austreten von mit Druck in den Kegelrollenlagern 11, 12 anstehendem Schmierstoff verhindern.

In die Stirnseite 17 des der Bedienseite B zugeordneten Endzapfens 7 ist eine Ausnehmung 18 eingeformt, in der zentrisch die Eintrittsöffnung einer ebenfalls in den Endzapfen 7 in Form einer zylindrischen Bohrung ausgebildeten Aufnahme 19 angeordnet ist. Die Tiefe der Aufnahme 19 ist derart bemessen, dass sie bis über die der Innenseite I des Walzgerüstes 1 zugeordnete Wellendichtung 15b in den Endzapfen 7 hineinreicht.

In entsprechender Weise ist ausgehend von der Stirnseite 20 des antriebsseitigen Endzapfens 8 eine Aufnahme 21 in den Endzapfen 8 eingeformt. Diese reicht bis über die der Innenseite I des Walzgerüstes 1 zugeordnete Wellendichtung 16b der Wälzlagerung 10 in den Endzapfen 8 hinein.

Die Aufnahmen 19, 21 sind über einen Verbindungskanal 22 miteinander verbunden, der koaxial zur Drehachse D der Arbeitswalze 2 verläuft. Der Verbindungskanal 22 kann beispielsweise durch zwei Tiefenbohrungen ausgebildet sein, die jeweils ausgehend von der jeweiligen Stirnseite 17 und 20 in die Arbeitswalze 2 eingebracht werden. Sein Durchmesser kann dabei kleiner sein als der Durchmesser der Aufnahmen 19, 21, so dass sich im Bereich des Übergangs von den Aufnahmen 19, 21 ein Absatz bildet, der zum Positionieren der in die Aufnahmen 19, 21 einzuschiebenden Bauelemente dienen kann.

In den Aufnahmen 19, 21 sitzen jeweils drei Einrichtungen V1, V2, V3 bzw. V4, V5, V6 zum Verteilen eines Schmierstoff-Gasstroms auf die jeweiligen Wälzlager 9, 10 und die jeweils innenliegende Wellendichtung 15b, 16b. Die Einrichtungen V1 - V6 sind jeweils gemäß dem in der EP 0 902 868 B1 im Einzelnen beschriebenen Stand der Technik ausgebildet, auf den hier insoweit Bezug genommen wird.

Jedem der Kegelrollenlager 11, 12 ist eine der Einrichtungen V1, V2 bzw. V5, V6 zugeordnet. Genauso werden die jeweiligen innenliegenden Wellendichtungen 15b bzw. 16b über jeweils eine Einrichtung V3 bzw. V4 mit dem erforderlichen Schmierstoff-Gasstrom versorgt.

Die derart in bekannter Weise ausgebildeten Einrichtungen V1 - V6 weisen jeweils ein zylindrisches Gehäuse auf, dessen Durchmesser bis auf ein geringes Untermaß dem Innendurchmesser der Aufnahmen 19, 21 entspricht, so dass die Vorrichtungen V1 - V6 problemlos in die Aufnahmen 19, 21 eingeschoben werden können. Hier nicht gezeigte, an den Innenflächen der jeweiligen Aufnahme 19, 21 anliegende Ringdichtungen dichten dabei eine im mittleren Abschnitt der Gehäuse jeweils ausgebildete Außenumfangsnut gegen die anderen Längenabschnitte der betreffenden Aufnahme 19 ,21 ab. In der Umfangsnut münden die hier ebenfalls nicht sichtbaren Abströmleitungen der jeweiligen Einrichtungen V1 - V6, über die der dem jeweils zugeordneten Kegelrollenlager 11, 12 bzw. der zugeordneten Wellendichtung 15b, 16b zugeteilte Schmierstoff-Gasstrom aus der jeweiligen Einrichtung V1-V6 austritt.

Mittels rohrartiger Einbaustücke 23 sind die Einrichtungen V1 - V6 dabei so positioniert, dass sie mittig zum jeweiligen Kegelrollenlager 11, 12 bzw. der jeweiligen Wellendichtung 15b, 16b ausgerichtet sind. In diesem Bereich führt von der jeweiligen Aufnahme 19, 21 jeweils eine radial ausgerichtete Abströmleitung 24 zur Umfangsfläche des jeweiligen Endzapfens 7, 8. Die Verbindungsbohrungen 24 sind dabei einerseits so angeordnet, dass sie im Bereich der jeweiligen Innenumfangsnut 14 der Innenringe 13 der Kegelrollenlager 11, 12 münden. Andererseits ist ihre Eintrittsöffnung im Bereich der jeweiligen Aufnahme 19, 21 jeweils so ausgerichtet, dass sie in Verbindung steht mit dem durch die Umfangsnut der Einrichtungen V1 - V6 in der jeweiligen Aufnahme 19, 21 jeweils gebildeten Ringraum 25.

Die der Antriebsseite A zugeordnete Aufnahme 21 ist durch einen Stopfen 26 dicht verschlossen, so dass die Lage der Verteileinrichtungen V4 - V6 über die jeweiligen Einbaustücke 23 in der Aufnahme 21 fixiert und ein Austreten von durch die Verteileinrichtungen V4 - V6 verteiltem Schmierstoff oder Gas sicher verhindert ist.

In der Ausnehmung 18 des der Bedienseite B zugeordneten Endzapfens 7 sitzt dagegen ein handelsüblicher drehentkoppelter Anschluss 27 für eine Versorgungsleitung 28, über die der zu verteilende Schmierstoff-Gasstrom L in die Aufnahme 19 geleitet wird.

Als Gasstrom zum Vorantreiben des zu verteilenden Schmierstoffs wird beim hier erläuterten Ausführungsbeispiel Druckluft verwendet, die im Umfeld des Walzgerüsts 1 beispielsweise zum Antrieb von anderen pneumatisch betätigten, hier nicht dargestellten Aggregaten benötigt wird und über eine Druckluftleitung 29 herangeführt wird.

Als Schmierstoff wird hier ein ebenfalls handelsübliches Öl verwendet, das eine für die jeweilige Schmieraufgabe ausreichende Viskosität besitzt. Das Öl wird über eine Ölversorgungsleitung 30 aus einem hier nicht gezeigten Vorrat herangeführt.

Die Versorgungsleitung 28 ist an eine Einspeiseeinrichtung 31 angeschlossen, in der ein aus der Druckluftleitung 29 entnommener Luftstrom und ein aus der Ölversorgungsleitung 30 entnommener Schmierstoffstrom in die Versorgungsleitung 28 eingespeist werden. Die Einleitung erfolgt dabei in bekannter Weise so, dass der Luftstrom in der Versorgungsleitung sowie allen mit ihr verbundenen Leitungen der Arbeitswalze 2 und Verteileinrichtungen V1 - V6 turbulent strömt, ohne dass es zu einer Vermischung von Schmieröl und Luft kommt. Auf diese Weise treibt der Luftstrom den auf den Innenflächen der Versorgungsleitung 28 und den betreffenden anderen Leitungen der Arbeitswalze 2 haftenden Schmierstoff zu den jeweils zu versorgenden Schmierstellen der Wälzlager 9, 10.

Von dem auf diese Weise zur ersten Verteileinrichtung V1 gelangenden Öl-Luftstrom L wird dort ein erster Teilstrom L1 abgezweigt, der durch die erste Abströmleitung 24 zur Innenumfangsnut 14 des ersten Kegelrollenlagers 11 der Wälzlagerung 9 gelangt und sich von dort über die in den Innenring 13 des Kegelrollenlagers 11 eingeformten Durchgangsbohrungen im Kegelrollenlager 11 verteilt. Gleichzeitig wird von der Verteileinrichtung V1 ein wesentlich größerer zweiter Teilstrom T1 der zweiten Verteileinrichtung V2 zugeteilt.

Die zweite Verteileinrichtung V2 teilt wie die Verteileinrichtung V1 von dem ihr zugeleiteten Teilstrom T2 einen Teilstrom L2 ab, der über die ihr zugeordnete Abströmleitung 24 in derselben Weise, wie für das Kegelrollenlager 11 beschrieben, in das Kegelrollenlager 12 der Wälzlagerung 9 geleitet wird. Gleichzeitig teilt die Verteileinrichtung V2 einen wesentlich größeren Teilstrom T2 der Verteileinrichtung V3 zu.

Die Verteileinrichtung V3 teilt von diesem Teilstrom T2 einen sehr geringen Schmierstoff-Luft-Teilstrom L3 ab, der über die ihr zugeordnete Abströmleitung 24 in die innenliegende Wellendichtung 15b geleitet wird. Der in die Wellendichtung 15b geleitete Schmierstoff hat die Aufgabe, die dort zwischen Dichtung und Außenfläche des Endzapfens 7 herrschende Reibung auf ein Minimum zu reduzieren. Gleichzeitig leitet die Verteileinrichtung V3 einen wesentlich größeren Teilstrom T3 in den Verbindungskanal 22, über den es zur Verteileinrichtung V4 gelangt.

Die Verteileinrichtung V4 teilt von diesem Teilstrom T3 wiederum einen sehr geringen Schmierstoff-Luft-Teilstrom L4 ab, der über die ihr zugeordnete Abströmleitung 24 in die innenliegende Wellendichtung 16b geleitet wird. Gleichzeitig leitet die Verteileinrichtung V4 einen wesentlich größeren Teilstrom T4 zur Verteileinrichtung V5.

Die fünfte Verteileinrichtung V5 teilt wie die Verteileinrichtungen V1 oder V2 von dem ihr zugeleiteten Teilstrom T4 einen Teilstrom L5 ab, der über die ihr zugeordnete Abströmleitung 24 in derselben Weise, wie für das Kegelrollenlager 11 der Wälzlagerung 9 beschrieben, in das Kegelrollenlager 11 der Wälzlagerung 10 geleitet wird. Gleichzeitig teilt die Verteileinrichtung V5 einen im Wesentlichen gleichen Teilstrom T5 der Verteileinrichtung V6 zu.

Die Verteileinrichtung V6 muss im Unterschied zu den Verteileinrichtungen V1 - V6 keine Aufteilung des zu ihr gelangenden Teilstroms T5 mehr vornehmen, sondern dient hier lediglich dazu, den Teilstrom T5 als Teilstrom L6 dem Kegelrollenlager 12 der Wälzlagerung 10 zuzuleiten.

**Bezugszeichen**

| | |
|---|---|
| 1 | Walzgerüst |
| 11,12 | Kegelrollengroßlager |
| 13 | innerer Lagerring der Kegelrollenlager 11,12 |
| 14 | Innenumfangsnut |
| 15a,15b | Wellendichtungen |
| 16a,16b | Wellendichtungen |
| 17 | Stirnseite des Endzapfens 7 |
| 18 | Ausnehmung |
| 19,21 | Aufnahme |
| 2,3 | Arbeitswalzen |
| 20 | Stirnseite des Endzapfens 8 |
| 22 | Verbindungskanal |
| 23 | Einbaustücke |
| 24 | Abströmleitung |
| 25 | Ringraum |
| 26 | Stopfen |
| 27 | Anschluss für die Versorgungsleitung 28 |
| 28 | Versorgungsleitung |
| 29 | Druckluftleitung |
| 30 | Ölversorgungsleitung |
| 31 | Einspeiseeinrichtung |
| 4 | Walzspalt |
| 5,6 | Stützwalze |
| 7,8 | Endzapfen |
| 9,10 | Wälzlagerungen |
| A | "Antriebsseite" des Walzgerüsts 1 |
| B | "Bedienseite" des Walzgerüsts 1 |
| D | Drehachse der Arbeitswalze 2 |
| G | Antriebsgetriebe |
| I | Innenseite des Walzgerüstes 1 |
| L1 - L6 | Teilströme des Schmierstoff-Gasstroms L |
| M | Antriebsmotor |
| S1,S2 | Ständer des Walzgerüstes 1 |
| T1 - T5 | Teilströme des Schmierstoff-Gasstroms L |
| V1 - V6 | Einrichtungen zum Verteilen eines |
| | Schmierstoff-Gasstroms L |

## Patentansprüche

1. Walze oder Rolle für ein Walzgerüst (1), mit einem ersten der Antriebsseite (A) des Walzgerüstes (1) zugeordneten endseitigen Zapfen (8) und einem der Bedienseite (B) des Walzgerüstes (1) zugeordneten zweiten endseitigen Zapfen (7) sowie einem in die Walze oder Rolle eingeformten Verbindungskanal (22), **dadurch gekennzeichnet,**
- **dass** in der Walze (2,3,5,6) oder Rolle eine Verteileinrichtung (V1-V6) zum Aufteilen eines Schmierstoff-Gasstroms (L) auf mindestens eine Abströmleitung (24) sitzt,
- **dass** die Abströmleitung (24) zu einer Umfangsfläche der Walze (2,3,5,6) oder Rolle führt und einem Wälzlager (9,10) zugeordnet ist, in dem die Walze (2,3,5,6) oder Rolle im fertig eingebauten Zustand drehbar gelagert ist, und
- **dass** die Verteileinrichtung (V1-V6) mit dem Verbindungskanal (22) verbunden ist, um den Schmierstoff-Gasstrom (L) zu der Verteileinrichtung (V1-V6) hin- oder von der Verteileinrichtung (V1-V6) wegzuleiten.

2. Walze oder Rolle nach Anspruch 1, **dadurch gekennzeichnet, dass** eine Aufnahme (19,21) für mindestens eine Verteileinrichtung (V1 - V6) in einen der Zapfen (7,8) der Walze (2,3,5,6) oder Rolle eingeformt ist.

3. Walze nach einem der Ansprüche 1 oder 2, **dadurch gekennzeichnet, dass** in jeden der Zapfen (7,8) jeweils eine Aufnahme (19, 21) für mindestens eine Verteileinrichtung (V1 - V6) eingeformt ist.

4. Walze nach Anspruch 3, **dadurch gekennzeichnet, dass** die Aufnahmen (19, 21) der Zapfen (7,8) mittels des durch die Walze (2,3,5,6) oder Rolle führenden Verbindungskanals (22) miteinander verbunden sind.

5. Walze oder Rolle nach Anspruch 4, **dadurch gekennzeichnet, dass** der Verbindungskanal (22) koaxial zu ihrer Drehachse (D) ausgerichtet ist.

6. Walze oder Rolle nach einem der Ansprüche 4 oder 5, **dadurch gekennzeichnet, dass** der Verbindungskanal (22) durch zwei aufeinander treffende Bohrungen erzeugt ist, von denen die eine von der Stirnseite (17) des einen Zapfens (7) und die andere von der Stirnseite des anderen Zapfens (8) in die Walze (2,3,5,6) oder Rolle eingeformt ist.

7. Walze oder Rolle nach einem der voranstehenden Ansprüche, **dadurch gekennzeichnet, dass** in mindestens einen der Zapfen (7,8) eine Aufnahme (19,21) für ein drehentkoppelndes Anschlusselement (27) eingeformt ist.

8. Walzgerüst zum Walzen metallischer Bänder mit mindestens einer Walze (2,3,5,6) oder Rolle, die im Bereich ihrer Endzapfen (7,8) jeweils in einer Wälzlagerung (9,10) gelagert ist, und mit mindestens einer Verteileinrichtung (V1-V6) zum Verteilen eines Schmierstoff-Gasstroms (L), **dadurch gekennzeichnet, dass** die Walze (2,3,5,6) oder Rolle gemäß einem der voranstehenden Ansprüche ausgebildet ist.

## Claims

1. Roll or cylinder for a roll stand (1), comprising a first end journal (8) associated with the drive side (A) of the roll stand (1) and a second end journal (7) associated with the operating side (B) of the roll stand (1) as well as a connecting channel (22) moulded into the roll or cylinder,
**characterised in that**,
- a distributing device (V1-V6) is positioned in the roll (2, 3, 5, 6) or cylinder for dividing a lubricant-gas flow (L) to at least one discharge line (24),
- the discharge line (24) leads to a circumferential surface of the roll (2, 3, 5, 6) or cylinder and is associated with a rolling bearing (9, 10), in which the roll (2, 3, 5, 6) or cylinder is mounted rotatably in the completely installed state and,
- the distributing device (V1-V6) is connected to the connecting channel (22) in order to conduct the lubricant-gas flow (L) to the distributing device (V1-V6) or away from the distributing device (V1-V6).

2. Roll or cylinder according to Claim 1, **characterised in that** a seat (19, 21) for at least one distributing device (V1-V6) is moulded into one of the journals (7, 8) of the roll (2, 3, 5, 6) or cylinder.

3. Roll according to Claim 1 or 2, **characterised in that** one seat (19, 21) for at least one distributing device (V1-V6) is respectively moulded into each of the journals (7, 8).

4. Roll according to Claim 3, **characterised in that** the seats (19, 21) of the journals (7, 8) are interconnected by the connecting channel (22) leading through the roll (2, 3, 5, 6) or cylinder.

5. Roll or cylinder according to Claim 4, **characterised in that** the connecting channel (22) is aligned coaxially to its rotational axis (D).

6. Roll or cylinder according to Claim 4 or 5, **characterised in that** the connecting channel (22) is produced by two mutually joining bores, one of which is moulded into the roll (2, 3, 5, 6) or cylinder from the end face (17) of one journal (7) and the other is moulded into the roll (2, 3, 5, 6) or cylinder from the end face of the other journal (8).

7. Roll or cylinder according to any one of the preceding claims, **characterised in that** a seat (19, 21) for a rotation-uncoupled connecting element (27) is moulded into at least one of the journals (7, 8).

8. Roll stand for rolling metallic strips comprising a least one roll (2, 3, 5, 6) or cylinder which is respectively mounted in a mounting on rolling bearings (9, 10) in the region of its end journals (7, 8), and comprising at least one distributing device (Vl-V6) for distributing a lubricant-gas flow (L), **characterised in that** the roll (2, 3, 5, 6) or cylinder is designed according to any one of the preceding claims.

## Revendications

1. Cylindre ou rouleau pour une cage de laminoir (1), avec un premier tourillon (8) d'extrémité, qui est associé au côté entraînement (A) de la cage de laminoir (1), et avec un deuxième tourillon (7) d'extrémité, qui est associé au côté service (B) de la cage de laminoir (1), ainsi qu'avec un canal de liaison (22), qui est formé dans le cylindre ou le rouleau,
**caractérisé en ce que**,
- dans le cylindre (2, 3, 5, 6) ou le rouleau, est loge un dispositif de répartition (VI - V6) pour répartir un flux de lubrifiant et gaz (L) dans au moins une conduite d'écoulement (24),
- la conduite d'écoulement (24) conduit à une surface périphérique du cylindre (2, 3, 5, 6) ou du rouleau et est associée à un palier à roulement (9, 10), dans lequel le cylindre (2, 3, 5, 6) ou le rouleau est installé à rotation, quand le montage est terminé, et
- le dispositif de répartition (VI - V6) est relié au canal de liaison (22) afin de conduire le flux de lubrifiant et gaz (L) au dispositif de répartition (VI - V6) ou hors du dispositif de répartition (VI - V6).

2. Cylindre ou rouleau selon la revendication 1, **caractérisé en ce que**, dans l'un des tourillons (7, 8) du cylindre (2, 3, 5, 6) ou du rouleau, est formé un réceptacle (19, 21) pour au moins un dispositif de répartition (VI - V6).

3. Cylindre selon l'une des revendications 1 ou 2, **caractérisé en ce que**, dans chacun des tourillons (7, 8), est respectivement formé un réceptacle (19, 21) pour au moins un dispositif de répartition (VI - V6).

4. Cylindre selon la revendication 3, **caractérisé en ce que** les réceptacles (19, 21) des tourillons (7, 8) sont reliés ensemble au moyen du canal de liaison (22) passant à travers le cylindre (2, 3, 5, 6) ou le rouleau.

5. Cylindre ou rouleau selon la revendication 4, **caractérisé en ce que** le canal de liaison (22) est orienté coaxialement par rapport à son axe de rotation (D).

6. Cylindre ou rouleau selon l'une des revendications 4 ou 5, **caractérisé en ce que** le canal de liaison (22) est réalisé par deux alésages, qui se rencontrant, lesquels sont formés dans le cylindre (2, 3, 5, 6) ou dans le rouleau, l'un du côté frontal (17) d'un tourillon (7) et l'autre du côté frontal de l'autre tourillon (8).

7. Cylindre ou rouleau selon l'une des revendications précédentes, **caractérisé en ce que**, dans au moins l'un des tourillons (7, 8), est formé un réceptacle (19, 21), qui est destiné à recevoir un élément de raccordement (27) découplant.

8. Cage de laminoir pour laminer des bandes métalliques, qui est dotée d'au moins un cylindre (2, 3, 5, 6) ou d'un rouleau, qui, dans la région de chacun de ses tourillons d'extrémité (7, 8), est monté dans un palier à roulement (9, 10), et d'au moins un dispositif de répartition (VI - V6) pour la répartition d'un flux de lubrifiant et gaz (L), **caractérisé en ce que** le cylindre (2, 3, 5, 6) ou le rouleau es conçu selon l'une des revendications précédentes.
